# FASCICULE DE BREVET EUROPEEN

(11) **EP 4 132 990 B1**
(45) Date de publication et mention de la délivrance du brevet: **13.11.2024**
(21) Numéro de dépôt: 21723887.2
(22) Date de dépôt: 08.04.2021
(51) Int. Cl.: C08G 63/08, C08G 63/688

(54) **PROCÉDÉ DE POLYMÉRISATION PAR VOIE RADICALAIRE DE THIONOLACTONES OU DE THIONOCARBONATES**
VERFAHREN ZUR RADIKALISCHEN POLYMERISATION VON THIONOLACTONEN ODER THIONOCARBONATEN
PROCESS FOR THE FREE RADICAL POLYMERIZATION OF THIONOLACTONES OR THIONOCARBONATES

(30) Priorité: 09.04.2020 FR 2003601
(43) Date de publication de la demande: 15.02.2023
(73) Titulaire: CENTRE NATIONAL DE LA RECHERCHE SCIENTIFIQUE, 75016 Paris (FR); UNIVERSITE TOULOUSE III - PAUL SABATIER, 31062 Toulouse Cedex 9 (FR)
(72) Inventeur: HARRISSON, Simon, 33140 CADAUJAC (FR); DESTARAC, Mathias, 31130 BALMA (FR)
(74) Mandataire: IPAZ
(86) Numéro de dépôt international: PCT/FR2021/050622
(87) Numéro de publication internationale: WO 2021/205123

(56) Documents cités:
- DATABASE EMBASE [online] ELSEVIER SCIENCE PUBLISHERS, AMSTERDAM, NL; 2019, BINGHAM N M ET AL: "Degradable vinyl copolymers through thiocarbonyl addition-ring-opening (TARO) polymerization", XP002800888, Database accession no. EMB-625518638
- NATHANIEL M. BINGHAM AND PETER J. ROTH: "Degradable vinyl copolymers through thiocarbonyl addition-ring-opening (TARO) polymerization", CHEMICAL COMMUNICATIONS, vol. 55, no. 1, 4 January 2019 (2019-01-04), ROYAL SOCIETY OF CHEMISTRY GBR, pages 55 - 58, XP002800944, ISSN: 1359-7345, DOI: 10.1039/C8CC08287A
- DATABASE COMPENDEX [online] ENGINEERING INFORMATION, INC., NEW YORK, NY, US; 13 July 2015 (2015-07-13), HEDIR G G ET AL: "Functional degradable polymers by radical ring-opening copolymerization of MDO and vinyl bromobutanoate: Synthesis, degradability and post-polymerization modification", XP002800889, Database accession no. E20152901037405
- GUILLAUME G. HEDIR, CRAIG A. BELL, RACHEL K. O'REILLY AND ANDREW P. DOVE: "Functional Degradable Polymers by Radical Ring-Opening Copolymerization of MDO and Vinyl Bromobutanoate: Synthesis, Degradability and Post-Polymerization Modification", BIOMACROMOLECULES, vol. 16, no. 7, 13 July 2015 (2015-07-13), AMERICAN CHEMICAL SOCIETY USA, pages 2049 - 2058, XP002800945, DOI: 10.1021/ACS.BIOMAC.5B00476

## Description

La présente invention concerne un procédé simple de préparation de polymères, de préférence biodégradables, à partir de thionolactones ou de thionocarbonates.

Plus particulièrement, la présente invention est relative à un procédé de préparation de copolymères, de préférence dégradables, par polymérisation radicalaire par ouverture de cycle mettant notamment en oeuvre des monomères de type thionolactones ou thionocarbonates, ainsi qu'aux copolymères, de préférence dégradables, obtenus par la mise en oeuvre de ce procédé.

La majorité des polymères synthétiques sont actuellement synthétisés par polymérisation par voie radicalaire de monomères vinyliques tels que par exemple l'éthylène, le méthacrylate de méthyle, le styrène et l'acétate de vinyle.

Les procédés de synthèse par voie radicalaire présentent l'avantage de tolérer une large gamme de fonctionnalités, permettant ainsi la synthèse de nombreux matériaux. L'application des techniques de polymérisation par voie radicalaire contrôlée, développées vers la fin du XX^{ème} siècle, permet aussi la synthèse de polymères et copolymères d'architecture complexe, comportant des copolymères à blocs, à gradients ou en étoile, avec contrôle de la masse molaire moyenne du polymère ainsi que de la distribution de masse molaire.

Un des principaux désavantages des polymères issus de la polymérisation par voie radicalaire est qu'ils sont difficilement dégradables. En effet, les différentes unités monomères sont liées entre elles par des liaisons carbone-carbone (C-C) qui sont résistantes à la dégradation. Ceci peut entrainer des dégâts environnementaux et limite aussi l'application de ces polymères dans le domaine médical où il est important d'éviter l'accumulation de polymères de haute masse molaire dans le corps.

Un moyen d'introduire la propriété de dégradabilité aux polymères synthétiques obtenus par polymérisation par voie radicalaire est d'utiliser un comonomère cyclique qui polymérise par polymérisation radicalaire par ouverture de cycle (RROP, de l'expression anglaise « Radical Ring-Opening Polymerization »). Ces monomères sont principalement de deux types : vinylique et exo-méthylénique. La polymérisation de ces monomères procède par l'addition d'un radical à une double liaison, suivie par l'ouverture du cycle et la génération d'une espèce linéaire selon les schémas réactionnels (1) et (2) suivants, relatifs respectivement aux monomères vinylique (1) et exo-méthylénique (2) :

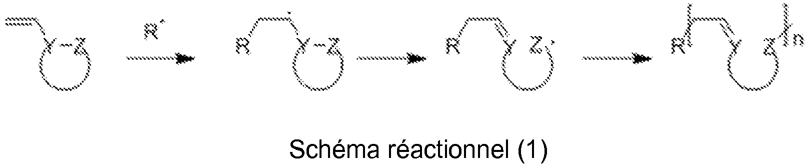

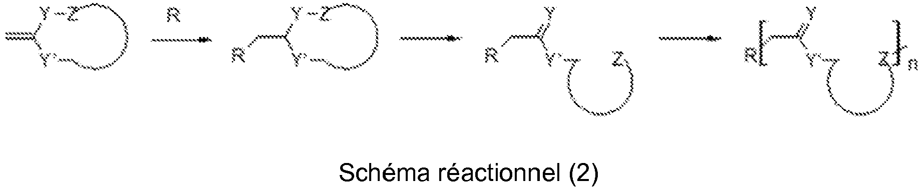

Selon les procédés représentés sur les schémas réactionnels (1) et (2), et si le cycle de type vinylique ou exo-méthylénique porte une fonctionnalité dégradable, celle-ci peut alors être incorporée au squelette du polymère, le rendant lui-même dégradable. Parmi les monomères de type exo-méthylénique, on peut en particulier mentionner le 2-méthylène-1 ,3-dioxane (MDO) qui se transforme en ester pendant la polymérisation par voie radicalaire (avec Y = Y' = O sur le schéma réactionnel 2). Récemment, ce monomère et d'autres monomères cycliques, ont été étudiés en polymérisation radicalaire contrôlée tel que décrit par exemple dans l'article de G. G. Hedir et al. (Biomacromolecules, 2015, 16, 2049-2058). Ils copolymérisent facilement avec les esters vinyliques et les ethers vinyliques mais plus difficilement avec les monomères styréniques, les (meth)acrylates et les (meth)acrylamides. Ces monomères sont par contre difficiles à synthétiser.

Plus récemment, certains auteurs ont proposé l'utilisation de différents monomères de type thionolactone, tels que la γ-phényl-γ-butyrolactone ou des thionophthalides dans des réactions de polymérisation par voie radicalaire, en association avec différents monomères (N. M. Bingham et al. (Chem. Commun., 2019, 55, 55). Il s'avère que ces monomères inhibent la polymérisation radicalaire de l'acétate de vinyle et ne sont pas incorporés dans le squelette du polymère lorsqu'ils sont associés au styrène, à l'acrylate de méthyle ou au méthacrylate de méthyle. Seul un monomère testé, à savoir la dibenzo[c,e]oxepane-5-thione (ou DOT) polymérise par voie radicalaire en présence d'un comonomère tel que l'acrylate de méthyle, l'acrylate de poly(éthylène glycol)méthyl ether (PEGA), le N,N-diméthyl acrylamide et l'acrylonitrile. Cependant, ce même monomère DOT inhibe la polymérisation radicalaire de l'acétate de vinyle, et du N-vinylcarbazole, et retarde la polymérisation radicalaire du styrène sans être incorporé dans le squelette du polymère. La prédictibilité du monomère DOT quant à sa capacité à être utilisé en polymérisation radicalaire avec un comonomère portant une insaturation éthylénique est donc totalement aléatoire. De plus, ce monomère DOT est assez difficile à synthétiser.

Il existe donc un besoin pour un procédé de synthèse permettant d'accéder de manière simple, de préférence avec de bons rendements, à des polymères synthétiques nouveaux, de préférence dégradables, par voie radicalaire. Plus particulièrement, le but de la présente invention est de fournir un procédé facile à mettre en oeuvre et offrant la possibilité d'obtenir une variété de polymères originaux à partir de composés accessibles.

Selon la présente invention, on entend par polymère dégradable, un polymère dont le squelette comporte des liaisons pouvant être facilement rompues, notamment par hydrolyse chimique ou digestion enzymatique, pour conduire à des molécules de taille plus petite et éventuellement moins polluantes. Selon l'invention, lesdites liaisons sont en particulier des liaisons thioesters ou des liaisons thiocarbonates.

De manière surprenante, les inventeurs ont mis au point un procédé de polymérisation radicalaire par ouverture de cycle permettant d'atteindre ces buts, en sélectionnant de manière judicieuse les comonomères entrant dans la réaction de polymérisation.

La présente invention a donc pour premier objet un procédé de préparation de copolymères, de préférence dégradables, ledit procédé comprenant au moins une étape de polymérisation radicalaire par ouverture de cycle d'au moins un monomère cyclique avec au moins un monomère comportant une insaturation éthylénique, en présence d'un amorceur de polymérisation par voie radicalaire, ledit procédé étant caractérisé en ce que :
(i) le monomère cyclique est choisi parmi les thionolactones et les thionocarbonates de formule (I) suivante : 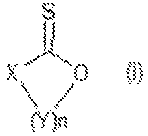 dans laquelle :
   - X est un atome d'oxygène ou un groupement -CH₂- ;
   - Y est choisi parmi les groupements -CH₂-, -CH₂-O-CH₂-, -O-CH₂-CH₂-, -CH₂-CH₂-O-CH₂-CH₂, et CH₂-O-CH₂-CH₂ ;
   - n est un nombre entier supérieur ou égal à 1, et de préférence inférieur ou égal à 25 ;
   étant entendu que :
   - lorsque Y représente un groupement -CH₂-, alors n est supérieur ou égal à 4,
   - lorsque X représente un atome d'oxygène, alors Y est différent d'un groupement -O-CH₂-CH₂-; et
   - lorsque X représente un groupement -CH₂-, et que Y représente un groupement -O-CH₂-CH₂-, alors l'atome d'oxygène du groupement Y est relié à X;
   et en ce que
(ii) le monomère comportant une insaturation éthylénique est choisi parmi les monomères de formule (II) suivante : 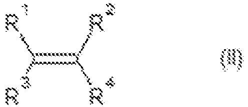 dans laquelle :
   - R¹, R² et R³ sont identiques et représentent un atome d'hydrogène,
   - R⁴ représente un atome d'hydrogène, un radical alkyle, ou un groupement choisi parmi les groupements imidazole, alkylimidazolium, carbazole, -OC(O)R⁵, ou un groupement de formule (III) suivante : 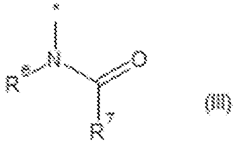
   - R⁵ représente un radical alkyle, halogénoalkyle, trifluoroalkyle, aryle, ou arylalkyle,
   - l'astérisque (*) représente le point d'ancrage du groupement de formule (III) à l'atome de carbone du composé de formule (II),
   - R⁶ et R⁷, identiques ou différents, représentent un atome d'hydrogène, un radical alkyle, cycloalkyle, arylalkyle, aryle, glycidyle, ou bien R⁶ et R⁷, conjointement avec les atomes d'azote et de carbone du groupement de formule (III) auquel ils sont liés, forment un cycle hétérocarboné comprenant de 4 à 7 atomes de carbone (en incluant l'atome de carbone portant l'atome d'oxygène).

Grâce à ce procédé, il est désormais possible d'accéder de manière simple, de préférence avec de bons rendements, à des copolymères, de préférence dégradables, et dont la dégradabilité peut être modulée facilement en modifiant les proportions respectives des monomères de formule (I) et (II). En effet, la dégradabilité du copolymère étant apportée par la présence de liaisons thioesters ou thiocarbonates suite à l'incorporation des monomères de formule (I) dans le squelette du copolymère, plus leur proportion est importante par rapport aux monomères de formule (II), plus la dégradabilité du copolymère est élevée. Ainsi, après dégradation, la longueur des fragments obtenus est inversement proportionnelle à la quantité de monomères de formule (I) intégrés dans le squelette du polymère. De plus, les groupements chimiques des extrémités des fragments obtenus sont fonctionnels et réactifs. Les monomères de formule (I) entrant dans la réaction de copolymérisation par voie radicalaire selon le procédé conforme à l'invention, sont de plus facilement synthétisables selon les techniques classiques connues de l'homme du métier à partir de précurseurs non soufrés (lactones) disponibles dans le commerce. Enfin, les monomères de formule (II) sont pour la plupart disponibles dans le commerce.

Selon une forme de réalisation préférée du procédé conforme à l'invention, les monomères de formule (I) sont des thionolactones (i.e. X est un groupement - CH₂-).

Dans les thionolactones ou les thionocarbonates (i.e. X représente un atome d'oxygène) de formule (I), et lorsque Y est un groupement -CH₂-, alors n varie de préférence de 4 à 25, et de façon particulièrement préférée de 4 à 21 atomes de carbone.

Dans les thionolactones ou les thionocarbonates de formule (I), et lorsque Y est un groupement -CH₂-O-CH₂-, -O-CH₂-CH₂-, -CH₂-CH₂-O-CH₂-CH₂, et CH₂-O-CH₂-CH₂ alors n varie de préférence de 1 à 5, et de façon particulièrement préférée de 1 à 3 atomes de carbone.

Dans les thionolactones ou les thionocarbonates de formule (I), et lorsque Y est plus spécifiquement un groupement -CH₂-O-CH₂- ou -O-CH₂-CH₂-, alors préférentiellement n = 1, 2 ou 3, et encore plus préférentiellement n = 2 ou 3.

La valeur de n telle que définie dans l'invention permet de disposer de monomères (I) ayant une tension de cycle suffisante pour permettre leur ouverture et la polymérisation, en particulier lorsque n ≤ 10.

Selon une forme de réalisation préférée du procédé conforme à l'invention, les thionolactones ou les thionocarbonates de formule (I) sont choisies parmi l'ε-thionocaprolactone de formule (1-1) ci-dessous, le ω-pentadecathionolactone de formule (I-2) ci-dessous, la nonadécathionolactone de formule (I-3), la tricosathionolactone de formule (I-4), les éthers couronnes comportant un thionoester, tel que le composé de formule (I-5) ci-dessous, le tetraméthylène thionocarbonate (TMTC) de formule (I-6) ci-dessous, et le thionocarbonate de diéthylèneglycol de formule (I-7) ci-dessous :

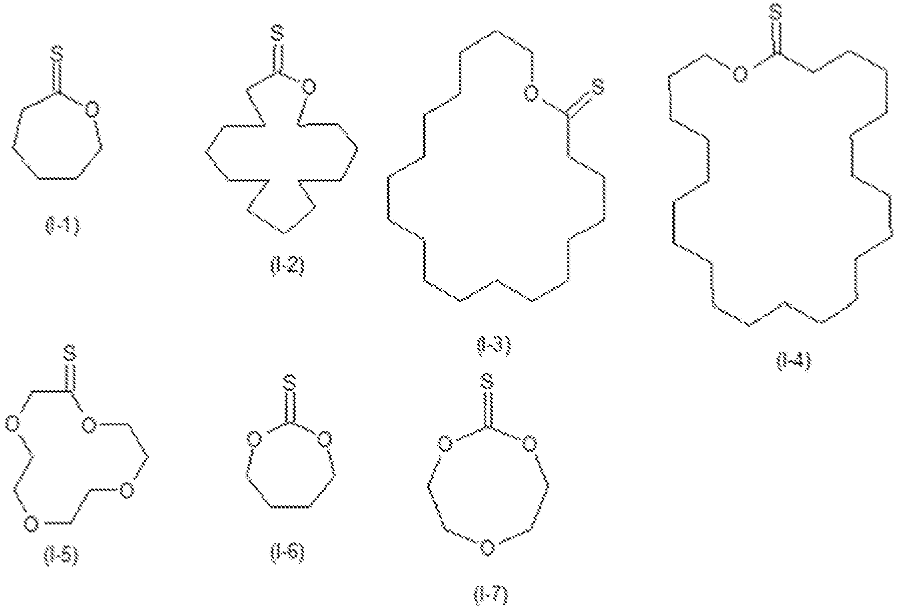

Parmi ces thionolactones ou ces thionocarbonates de formule (I-1) à (I-7), l'ε-thionocaprolactone de formule (I-1) est particulièrement préférée.

Les radicaux alkyle mentionnés pour R⁴, R⁵, R⁶ et R⁷, peuvent être linéaires ou ramifiés et comporter de 1 à 22 atomes de carbone, lesdits radicaux étant éventuellement substitués par au moins un radical hydroxyle, aryle ou cycloalkyle. A ce titre, on peut par exemple mentionner les radicaux méthyle, éthyle, iso-propyle, *n-*butyle, 2-butyle, iso-butyle, tert-butyle, n-pentyle, iso-pentyle, néo-pentyle, tert-pentyle, 2-méthylbutyle, hexyle, n-octyle, iso-octyle, 2-éthyl-1-hexyle, 2,2,4-triméthylpentyle, nonyle, néo-décanyle, décyle, dodécyle, octadécyle, béhényle, 3-phénylpropyle, 3,3-diphénylpropyle, 2,3-dihydroxypropyle, et cyclohexylméthyle.

Les radicaux cycloalkyle mentionnés pour R⁶ et R⁷ comportent de préférence de 3 à 12 atomes de carbone. Parmi de tels radicaux cycloalkyle, on peut notamment citer les radicaux adamantyle et cyclohexyle.

Au sens de la présente invention, on entend par radical aryle, un groupement hydrocarboné aromatique monocyclique ou polycyclique, éventuellement substitué par un radical alkyle, alcoxyle. A titre de radical aryle, on peut en particulier citer les groupements phényle, trityle, et p-méthoxybenzyle, naphtalényle, anthracényle, et pyrényle. Parmi de tels groupements, le groupement phényle est particulièrement préféré.

Lorsque R⁴ représente un radical alkylimidazolium, le substituant alkyle peut comprendre de 1 à 16 atomes de carbone. Dans ce cas, le radical alkylimidazolium comprend un contre ion pouvant par exemple être choisi parmi les ions Br, BF₄⁻, PF₆⁻, etc...

Parmi les radicaux arylalkyle mentionnés pour R⁶ et R⁷, on peut tout particulièrement mentionner le radical benzyle.

Lorsque R⁶ et R⁷, conjointement avec les atomes d'azote et de carbone du groupement de formule (III) auquel ils sont liés, forment un cycle hétérocarboné, celui-ci peut notamment être un cycle pyrrolidone ou caprolactame.

Selon une forme de réalisation préférée de l'invention, R⁴ représente un radical méthyle ou hexyle, R⁵ représente un radical méthyle ou t-butyle, R⁶ et R⁷ sont identiques et représentent un radical méthyle ou bien forment, conjointement avec les atomes d'azote et de carbone du groupement de formule (III) auquel ils sont liés, un cycle pyrrolidone ou caprolactame.

Selon une première forme de réalisation préférée du procédé conforme à la présente invention, les monomères de formule (II) sont choisis parmi ceux dans lesquels R⁴ représente un groupement -OC(O)R⁵. Ces monomères de formule (II) particuliers sont des esters vinyliques, ils peuvent être représentés par la formule (II-1) ci-après : 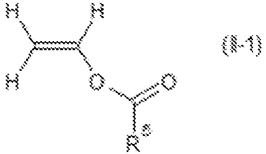 dans laquelle R⁵ peut prendre les mêmes significations que celles indiquées ci-dessus pour les monomères de formule (II).

Parmi les monomères de formule (II-1), on peut citer l'acétate de vinyle, le pivalate de vinyle, le trifluoroacétate de vinyle, le chloroacétate de vinyle, le propionate de vinyle, le butyrate de vinyle, le néodécanoate de vinyle (R⁵ = C₉H₁₉, mélange d'isomères), et le trifluorobutyrate de vinyle. Parmi ces monomères de formule (II-1), l'acétate de vinyle et le pivalate de vinyle sont particulièrement préférés.

Selon une deuxième forme de réalisation préférée du procédé conforme à la présente invention, les monomères de formule (II) sont choisis parmi ceux dans lesquels R⁴ représente un radical alkyle linéaire ou ramifié. Ces monomères de formule (II) particuliers sont des α-oléfines. Parmi de tels monomères de formule (II), on peut citer l'éthylène, et l'octène. L'éthylène est particulièrement préféré.

Selon une troisième forme de réalisation préférée du procédé conforme à la présente invention, les monomères de formule (II) sont choisis parmi ceux dans lesquels R⁴ représente un groupement de formule (III). Ces monomères de formule (II) particuliers sont des monomères N-vinyliques, ils peuvent être représentés par la formule (II-2) ci-après : 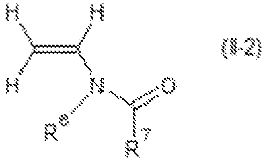 dans laquelle R⁶ et R⁷ peuvent prendre les mêmes significations que celles indiquées ci-dessus pour le groupement de formule (III) des monomères de formule (II).

Parmi les monomères de formule (II-2), on peut en particulier citer les monomères N-vinyliques acycliques tels que le N-vinylformamide, le N-vinylacétamide et le N-méthyl,N-vinylacétamide, ainsi que les monomères N-vinyliques cycliques, (lorsque R⁶ et R⁷ forment un cycle hétérocarboné conjointement avec les atomes d'azote et de carbone du groupement de formule (III) auquel ils sont liés) tels que la N-vinylpyrrolidone, la N-vinylpipéridone, et le N-vinylcaprolactame. Parmi de tels monomères de formule (II-2), le N-vinylacétamide et la N-vinylpyrrolidone sont particulièrement préférés.

Selon une forme de réalisation particulièrement préférée du procédé conforme à la présente invention, les monomères de formule (II) sont choisis parmi les monomères des première, deuxième et troisième formes de réalisation préférées telles que définies ci-dessus, et en particulier sont choisis parmi les monomères de formule (II-1) telle que définie ci-dessus, (II-2) telle que définie ci-dessus, et les α-oléfines telles que définies ci-dessus.

Selon le procédé conforme à l'invention, la proportion de monomères de formule (I) est de préférence choisie de telle sorte que le ou les monomères de formule (I) représentent au plus 50 % en nombre par rapport au nombre total de monomères de formules (I) et (II). Selon une forme de réalisation particulièrement préférée, le ou les monomères de formule (I) représentent de 5 à 30 % environ en nombre, en encore plus préférentiellement de 10 à 20 % environ en nombre, par rapport au nombre total de monomères de formules (I) et (II). En effet, lorsque la proportion de monomères de formule (I) est inférieure à 5 % en nombre, le taux de dégradabilité du polymère est peu important, ce qui ne présente que peu d'intérêt par rapport aux polymères non dégradables. Lorsque la proportion de monomères de formule (I) est supérieure à 30 % en nombre, le processus de polymérisation radicalaire par ouverture de cycle est altéré, en particulier ralenti.

Au sens de la présente invention, on entend par amorceur de polymérisation par voie radicalaire, une espèce chimique capable de former des radicaux libres c'est-à-dire des radicaux possédant un ou plusieurs électrons non appariés sur leur couche externe.

Selon le procédé conforme à l'invention, l'amorceur de polymérisation par voie radicalaire est de préférence choisi parmi les peroxydes et hydroperoxydes organiques, les dérivés azoïques, et les couples oxydo-réducteurs générateurs de radicaux (systèmes redox).

Parmi les peroxydes et hydroperoxydes organiques, on peut en particulier mentionner le peroxyde de dilauroyle (LPO), le peroxyacétate t-butyle, le peroxybenzoate de t-butyle, le peroxyoctoate de t-butyle, le peroxydodécanoate de t-butyle, le peroxyisobutyrate de t-butyle, le peroxypyvalate de t-amyle, le peroxypyvalate de t-butyle, le peroxydicarbonate de di-isopropyle, le peroxydicarbonate de dicyclohexyle, le peroxyde de dicumyle, le peroxyde de dibenzoyle, le peroxydisulfate de potassium, le peroxydisulfate de sodium, le peroxydisulfate d'ammonium, l'hydroperoxyde de cumène et l'hydroperoxyde de t-butyle. Parmi ces peroxydes organiques, le LPO et l'hydroperoxyde de t-butyle sont particulièrement préférés.

Parmi les dérivés azoïques, on peut en particulier mentionner le 2,2' azobis(isobutyronitrile) ou AIBN, le 2,2'-azobis(2-cyano-2-butane), le diméthyl-2,2'-azobisdiméthylisobutyrate, le 4,4'-azobis-(acide 4-cyanopentanoique), le 1,1'-azobis-(cyclohexanecarbonitrile), le 2-(t-butylazo)-2-cyanopropane, le 2,2'-azobis-[2-méthyl-N(1,1)-bis (hydroxyméthyl)-2-hydroxyéthyl] propanamide, le 2,2'-azobis-[2-méthyl-N-hydroxyéthyl]-propanamide, le dichlorhydrate de 2,2'-azobis-(N,N'-diméthylèneisobutyramidine), le dichlorhydrate de 2,2'-azobis-(2-amidinopropane), le 2,2'-azobis-(N,N'-diméthylène isobutyramine), le 2,2'-azobis-(2-méthyl-N-[1,1bis-(hydroxyméthyl)-2-hydroxyéthyl]propionamide), le 2,2'-azobis-(2-méthyl-N-[1,1-bis-(hydroxyméthyl)propionamide], le 2,2'-azobis-[2-méthyl-N-(2-hydroxyéthyl)propionamide], le 2,2'-azobis-(isobutyramide)dihydrate, le 2,2'-azobis-(2,2,4-triméthylpentane) et le 2,2'-azobis-(2-méthylpropane). Parmi ces dérivés azoïques, le 2,2' azobis(isobutyronitrile) est particulièrement préféré.

Les systèmes redox sont par exemple choisis parmi les systèmes comportant des combinaisons telles que :
- les mélanges de peroxyde d'hydrogène, de peroxyde de dialkyle, d'un hydroperoxyde, d'un perester, d'un percarbonate et composés similaires et d'un sel de fer, d'un sel de titane, de formaldéhyde sulfoxylate de zinc ou de formaldéhyde sulfoxylate de sodium, et d'un sucre réducteur,
- les mélanges d'un persulfate, perborate ou perchlorate de métal alcalin ou d'ammonium avec un bisulfite de métal alcalin, tel que le métabisulfite de sodium, et un sucre réducteur, et
- les mélanges d'un persulfate de métal alcalin avec un acide arylphosphinique, tel que l'acide benzène phosphonique et autres similaires, et un sucre réducteur.

Parmi de tels systèmes redox, on préfère tout particulièrement les associations de persulfate d'ammonium et de formaldéhyde sulfoxylate de sodium, et d'hydroperoxyde de tert-butyle et d'acide ascorbique.

Il est également possible d'utiliser un amorceur photochimique, dans l'ultraviolet (UV) ou le visible. Parmi les amorceurs utilisables dans l'UV, on peut notamment citer la 2,2-diméthoxy-2-phénylacétophénone, les couples benzophénone/amine ou benzophénone/alcool. Parmi les amorceurs utilisables dans le visible, on peut mentionner les thioxanthones. Enfin, on peut également utiliser certains agents de contrôle RAFT de type xanthate ou trithiocarbonate qui sont également de bons amorceurs photochimiques dans l'UV et le visible.

La quantité d'amorceur de polymérisation par voie radicalaire à utiliser selon le procédé conforme à la présente invention est généralement déterminée de manière à ce que la quantité de radicaux générés soit d'au plus 5 % en mole environ par rapport à la quantité totale de monomères de formules (I) et (II), et de préférence d'au plus 1 % en mole environ.

L'étape de polymérisation radicalaire par ouverture de cycle des monomères de formules (I) et (II) peut être menée en masse (sans solvant) ou en solution dans un solvant choisi de telle manière que le milieu réactionnel reste homogène pendant toute la durée de la réaction de polymérisation. En général, le solvant est organique mais il n'est pas exclu d'utiliser un solvant aqueux tel que l'eau ou un mélange d'eau et d'un co-solvant si la solubilité du (des monomères) le justifie. La polymérisation des monomères de formules (I) et (II) peut également être menée en milieu hétérogène, le polymère formé étant insoluble dans le milieu réactionnel. La polymérisation peut aussi menée par voie précipitante, ou en dispersion, en émulsion ou en suspension.

Selon un mode de réalisation préféré de l'invention, l'eau, des mélanges hydroalcooliques ou des solvants organiques sont utilisés comme milieu de réaction. Les solvants organiques sont préférés.

La quantité totale en matière polymérisable du milieu réactionnel (quantité totale de monomères de formules (I) et de formule (II)) peut être de 100 % lorsque la polymérisation est réalisée en masse, c'est-à-dire sans solvant. Lorsque la polymérisation est réalisée dans un solvant, cette quantité totale peut varier de 10 % à 90 % environ en masse par rapport à la masse totale du milieu réactionnel, de préférence de 20 à 80 % environ en masse, et encore plus préférentiellement de 30 à 60 % environ par rapport à la masse totale du milieu réactionnel.

L'étape de polymérisation du procédé conforme à l'invention peut être réalisée à une température de 5 à 150°C environ, en fonction de la nature des monomères de formules (I) et (II) utilisés pendant la réaction. Selon une forme de réalisation préférée du procédé de l'invention, l'étape de polymérisation est réalisée à une température de 10 à 100°C environ, et encore plus préférentiellement de 20 à 80°C environ.

La durée de l'étape de polymérisation varie généralement de 1 à 12 heures environ, et encore plus préférentiellement de 2 à 8 heures environ.

Comme indiqué précédemment, l'étape de polymérisation est de préférence menée uniquement en présence des monomères de formules (I) et (II) et d'un amorceur de polymérisation par voie radicalaire, c'est-à-dire sans agent de contrôle de la polymérisation. Cependant, selon une variante du procédé conforme à l'invention, il est néanmoins possible de mettre en oeuvre l'étape de polymérisation en présence d'un agent de contrôle de la polymérisation, permettant ainsi d'accéder à des copolymères, de préférence dégradables, à blocs, à gradient de composition, en peigne, greffés en étoile ou encore hyperramifiés. En effet, on connait différents procédés de polymérisation radicalaire contrôlée, permettant d'obtenir des polymères à architecture et masse contrôlées. Ces procédés sont définis selon la nature chimique des agents de contrôle impliqués. La présente invention peut faire intervenir un agent de contrôle pour les technologies de polymérisation radicalaire contrôlée par transfert de chaîne réversible par addition-fragmentation (en anglais « *Reversible Addition-Fragmentation Chain Transfer* » (RAFT)), notamment en présence de xanthates (en anglais « *Macromolecular Design by Interchange of Xanthates* » (MADIX)), de polymérisation par transfert d'atomes (en anglais « *Atom Transfer Radical Polymerization* » (ATRP)), de polymérisation par transfert d'iode (en anglais « *lodine Transfer Polymerization* » (ITP)), de polymérisation catalysée par transfert de chaîne réversible (en anglais « *Reversible Chain Transfer-catalyzed radical Polymerization* » (RCTP)), de polymérisation en présence de composés organotellurés (en anglais « *Tellurium-mediated Radical Polymerization* » (TERP)), de polymérisation en présence de composés organocobalt (en anglais « *Cobalt-Mediated radical Polymerization* » (CoMP)), ou encore de polymérisation réversible par coordination (en anglais « Réversible Coordination-Mediated Polymerization »(RCMP)). Ces différentes technologies sont décrites dans la référence Polymer Chemistry 2018, 9, 4947-4967 et références citées.

Le procédé de l'invention peut en outre mettre en oeuvre lors de l'étape de polymérisation d'autres monomères insaturés que les monomères de formule (II), tels que par exemple des monomères choisis parmi les acrylates, les méthacrylates, les acrylamides, les méthacrylamides, les styréniques, les diallyliques, les vinyl phosphonates, et les vinyl sulfonates.

Le procédé de l'invention permet ainsi de conduire à un copolymère présentant des liaisons thioesters (lorsque X = -CH₂-) ou thiocarbonates (lorsque X = -O-) qui sont facilement dégradables.

Dans ledit procédé mettant en oeuvre un monomère cyclique (I) avec au moins un monomère comportant une insaturation éthylénique (II) en présence d'un amorceur de polymérisation par voie radicalaire, une fraction du monomère cyclique (I) peut également être consommée lors de la polymérisation sans que l'ouverture de cycle n'ait lieu. Le copolymère ainsi obtenu comprend alors, outre des liaisons thioesters ou thiocarbonates par ouverture de cycle, des unités de monomère (I) cycliques présentant des liaisons thioacétals et/ou orthodithioesters.

Ces unités de monomère (I) cycliques ayant des liaisons thioacétals et/ou orthodithioesters présentent l'avantage d'être sensibles à l'attaque chimique donc potentiellement dégradables.

Les copolymères dégradables obtenus par la mise en oeuvre du procédé conforme à la présente invention sont nouveaux en soi et constituent à ce titre le deuxième objet de l'invention.

La présente invention a donc également pour deuxième objet, un copolymère, de préférence dégradable, ledit polymère étant caractérisé en ce qu'il comprend des liaisons thioesters ou thiocarbonates, et qu'il résulte de la polymérisation radicalaire par ouverture de cycle :
(i) d'au moins un monomère cyclique choisi parmi les thionolactones et les thionocarbonates de formule (I) suivante : 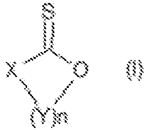 dans laquelle :
   - X est un atome d'oxygène ou un groupement -CH₂- ;
   - Y est choisi parmi les groupements -CH₂-, -CH₂-O-CH₂-, -O-CH₂-CH₂-, -CH₂-CH₂-O-CH₂-CH₂, et CH₂-O-CH₂-CH₂ ;
   - n est un nombre entier supérieur ou égal à 1 ;
   étant étendu que :
   - lorsque Y représente un groupement -CH₂-, alors n est supérieur ou égal à 4,
   - lorsque X représente un atome d'oxygène alors Y est différent d'un groupement -O-CH₂-CH₂- ; et
   - lorsque X représente un groupement -CH₂-, et que Y représente un groupement -O-CH₂-CH₂-, alors l'atome d'oxygène du groupement Y est relié à X; et
(ii) d'au moins un monomère comportant une insaturation éthylénique choisi parmi les monomères de formule (II) suivante : 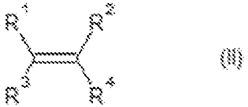 dans laquelle :
   - R¹, R² et R³ sont identiques et représentent un atome d'hydrogène,
   - R⁴ représente un atome d'hydrogène, un radical alkyle, ou un groupement choisi parmi les groupements imidazole, alkylimidazolium, carbazole, -OC(O)R⁵, ou un groupement de formule (III) suivante : 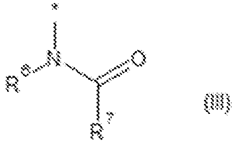
   - R⁵ représente un radical alkyle, halogénoalkyle trifluoroalkyle, aryle, ou arylalkyle,
   - l'astérisque (*) représente le point d'ancrage du groupement de formule (III) à l'atome de carbone du composé de formule (II),
   - R⁶ et R⁷, identiques ou différents, représentent un atome d'hydrogène, un radical alkyle, cycloalkyle, arylalkyle, aryle, glycidyle, ou bien R⁶ et R⁷, conjointement avec les atomes d'azote et de carbone du groupement de formule (III) auquel ils sont liés, forment un cycle hétérocarboné comprenant de 4 à 7 atomes de carbone (en incluant l'atome de carbone portant l'atome d'oxygène),
en présence d'un amorceur de polymérisation par voie radicalaire.

Les préférences indiquées ci-dessus en référence au premier objet de l'invention concernant les monomères de formules (I) et (II), s'appliquent également au deuxième objet de l'invention.

Selon une forme de réalisation particulière et préférée de l'invention, ledit copolymère statistique résulte de la polymérisation de l'ε-thionocaprolactone et de l'acétate de vinyle ou de la copolymérisation de l'ε-thionocaprolactone et de l'acétate de vinyle en présence d'un xanthate, tel que l'O-éthyl S-(1-méthoxycarbonyléthyl)dithiocarbonate, à titre d'agent de contrôle de la polymérisation radicalaire.

Selon une forme de réalisation préférée du deuxième objet de l'invention, le copolymère, de préférence dégradable, est un copolymère statistique.

Selon l'invention, le copolymère, de préférence dégradable, présente de préférence une masse molaire moyenne en nombre de 2000 à 200000 g/mol environ, et encore plus préférentiellement de 5000 à 100000 g/mol environ.

L'indice de polymolécularité du polymère, de préférence dégradable, conforme à l'invention varie de préférence de 1,2 à 4, et encore plus préférentiellement de 1,4 à 3.

Le taux de liaisons thioesters (lorsque X = -CH₂-) ou thiocarbonates (lorsque X = -O-) dans la chaîne principale du copolymère dégradable conforme à l'invention est de préférence d'au moins 2% en nombre, préférentiellement de 2 à 15 % en nombre, et encore plus préférentiellement de 5 à 10% en nombre, par rapport au nombre total de liaisons de la chaîne principale.

Selon l'invention, on entend par chaine principale du copolymère, l'enchainement de liaisons le plus long, c'est-à-dire sans inclure les liaisons des substituants latéraux.

Grâce à leur caractère dégradable, les copolymères conformes à la présente invention peuvent être utiles dans tout type d'industrie. A titre d'exemple, on peut et en particulier mentionner le domaine biomédical, l'agriculture, la cosmétique, l'extraction du pétrole, la détergence, le relargage de produits actifs et l'emballage.

Pour les copolymères de l'invention qui ne présenteraient qu'une faible dégradabilité, voire nulle, ceux-ci pourraient être utiles également dans le domaine médical, notamment pour le plombage dentaire, ou tout type de domaine pour lequel on souhaite réduire le rétrécissement associé à la polymérisation.

### EXEMPLES

### EXEMPLE 1 : Synthèse d'un copolymère dégradable à base d'acétate de vinyle et d'ε-thionocaprolactone selon le procédé de l'invention

### 1) Première étape : synthèse de l'ε-thionocaprolactone (produit de formule (I-1))

Dans un ballon bicol de 500 mL surmonté d'un réfrigérant, ont été introduits du P₄S₁₀ (21,9 mmol, 0,25 eq), de l'ε-caprolactone (87,91 mmol, 1 eq), de l'hexaméthyldisiloxane (HMDSO) (146,31 mmol, 1,67 eq) et 90 mL d'acétonitrile anhydre. Après 10 minutes d'inertage par un flux d'argon, le mélange a été chauffé à 82°C pendant 2 heures. Ensuite, le milieu réactionnel a été refroidi à 0°C. 22,5 mL d'une solution de K₂CO₃ 5M ont été ajoutés lentement au milieu, celui-ci étant maintenu à 0°C pendant 30 mn après la fin de l'introduction. Le mélange a ensuite été dilué par 200 mL de diéthyl ether, puis le produit a été extrait avec 2×100mL d'eau, et ensuite avec 100 mL de saumure. La phase organique a ensuite été séchée sur sulfate de magnésium puis le solvent a été évaporé sous vide. Le produit a été purifié par chromatographie sur colonne (éluant cyclohexane/acetate d'éthyle 7/3). Le rendement était de 60%. Le produit final était un liquide jaune.

**NMR:** ¹H (CDCl₃; 300MHz) : 1.79ppm (*m*, **2H**); 1.91ppm (*m*, **4H**); 3.20ppm (*m*, **2H);** 4.50ppm (*t*, **2H**).

¹³C (CDCl₃; 300mHZ) : 25,9 ppm ; 28,51 ppm ; 28,63 ppm ; 46,17 ppm ; 74,37 ppm ; 227,47 ppm

### 2) Deuxième étape : synthèse du copolymère

Dans un tube de Schlenk, on a introduit 0,017 g (0,103 mmol) d'azobisisobutyronitrile (AIBN), 0,235 g (1,8 mmol) d'ε-thionocaprolactone obtenu ci-dessus à l'étape précédente et 1,622 g (18,85 mmol) d'acétate de vinyle. L'ε-thionocaprolactone (monomère de formule (1-1)) représentait 9,54 % (en mole) par rapport à l'acétate de vinyle (monomère de formule (II)). Le milieu réactionnel a été dégazé puis maintenu sous argon à une température de 70°C pendant 5 heures et 20 minutes. La conversion en monomère, déterminée par résonnance magnétique nucléaire de l'hydrogène (RMN ¹H), était de 100 % pour l'ε-thionocaprolactone et de 85 % pour l'acétate de vinyle. Le milieu réactionnel a été repris par un minimum de toluène puis précipité dans l'éther de pétrole. La masse molaire moyenne en nombre (Mn), ainsi que l'indice de polymolécularité (Mw/Mn) du polymère purifié ainsi obtenu, sous forme de poudre, ont été mesurés par chromatographie d'exclusion stérique (éluant : diméthylformamide (DMF) / 10 mM LiBr) avec une courbe d'étalonnage à base de polystyrène. Mn = 32800 g/mol ; Mw/Mn = 2,83.

### EXEMPLE 2 : Synthèse d'un copolymère statistique dégradable à base d'acétate de vinyle et d'ε-thionocaprolactone en présence d'un xanthate selon le procédé de l'invention

Dans un tube de Schlenk, on a introduit 0,064 g d'AIBN (0,388 mmol), 1,04 g (7,99 mmol) d'ε-thionocaprolactone, telle que préparée ci-dessus à l'étape 1) de l'exemple 1, et 5,75 g (66,8 mmol) d'acétate de vinyle en présence de 0,159 g de O-éthyl S-(1-méthoxycarbonyléthyl)dithiocarbonate (0,716 mmol), à titre d'agent de contrôle de la polymérisation. L'O-éthyl S-(1-méthoxycarbonyléthyl)dithiocarbonate a préalablement été synthétisé selon le protocole indiqué par Liu et al. (ACS Macro Mett, 2015, 4, 89-93). Le milieu réactionnel a été dégazé puis maintenu sous argon à 70°C pendant 7h. La conversion en monomère, déterminée par RMN ¹H, était de 95% en ε-thionocaprolactone et de 69% en acétate de vinyle. Le milieu a été repris par un minimum de toluène et précipité dans l'éther de pétrole. Ensuite, la masse molaire moyenne en nombre et l'indice de polymolécularité du polymère purifié, obtenu sous forme de poudre, ont mesurés comme indiqué ci-dessus dans l'exemple 1. Mn = 6000 g/mol ; Mw/Mn = 1,54.

### EXEMPLE 3 : Synthèse d'un copolymère dégradable à base de pivalate de vinyle et d'ε-thionocaprolactone en présence d'un xanthate selon le procédé de l'invention

Dans un ballon bicol de 500 mL, on a introduit 3,285 g d'AIBN (0,02 mol), 13 g (0,1 mol) d'ε-thionocaprolactone, telle que préparée ci-dessus à l'étape 1) de l'exemple 1, et 115,35 g (0,9 mol) de pivalate de vinyle en présence de 5,4 g (0,026 mol) d'O-éthyl S-(1-méthoxycarbonyléthyl)dithiocarbonate, agent de contrôle de la polymérisation. Le milieu réactionnel a été dégazé puis maintenu sous argon à 70°C pendant 18h. La conversion en monomère, déterminée par RMN ¹H, était de 85% en ε-thionocaprolactone et de 92% en pivalate de vinyle. Le milieu a été repris par un minimum de toluène et précipité dans l'éther de pétrole. Ensuite, la masse molaire moyenne en nombre et l'indice de polymolécularité du polymère purifié, obtenu sous forme de poudre, ont mesurés comme indiqué ci-dessus dans l'exemple 1. Mn = 4500 g/mol ; Mw/Mn = 1,7.

### EXEMPLE 4 : Dégradation chimique du copolymère à base de pivalate de vinyle et d'ε-thionocaprolactone de l'exemple 3.

20 mg du copolymère de l'exemple 3 ont été dilués dans 10 mL de dichlorométhane avant addition de 10 mL d'isopropyl amine. Le milieu réactionnel a été agité pendant une nuit à température ambiante. Le solvant et l'amine ont ensuite été évaporés sous pression réduite, puis le résidu a été dissous dans le THF et analysé par chromatographie d'exclusion stérique avec une installation équipée de deux colonnes Styragel H3R et HR4E, d'un détecteur réfractométrique et d'un détecteur de diffusion de lumière, pour une analyse dans le tetrahydrofurane (THF) à 35°C et un débit de 1mn/min. Il apparaît qu'après dégradation du copolymère par l'isopropyl amine, la distribution de masse molaire est fortement décalée dans le domaine des faibles masses molaires comparativement au polymère d'avant traitement, attestant de la dégradation du squelette résultant de la présence des liaisons thioesters. A noter qu'il a été vérifié que dans des conditions identiques de traitement chimique, un échantillon d'homopolymère de poly(pivalate de vinyle) de même masse molaire ne subit pas de modification chimique détectable.

### EXEMPLE 5 : Synthèse d'un copolymère dégradable à base d'acétate de vinyle et de ω-pentadecathionolactone selon le procédé de l'invention

### 1) Première étape : synthèse de la ω-pentadecathionolactone (produit de formule (I-2))

Dans un ballon bicol de 500 mL surmonté d'un réfrigérant, ont été introduits du P₄S₁₀ (21,9 mmol, 0,25 eq), de la ω-pentadecalactone (87,91 mmol, 1 eq), de l'hexaméthyldisiloxane (HMDSO) (146,31 mmol, 1,67 eq) et 90 mL de p-xylene anhydre. Après 10 minutes d'inertage par un flux d'argon, le mélange a été chauffé à 140°C pendant 4 heures. Ensuite, le milieu réactionnel a été refroidi à 0°C. 22,5 mL d'une solution de K₂CO₃ 5M ont été ajoutés lentement au milieu, celui-ci étant maintenu à 0°C pendant 30 mn après la fin de l'introduction. Le mélange a ensuite été dilué par 200 mL de diéthyl ether, puis le produit a été extrait avec 2×100mL d'eau, et ensuite avec 100 mL de saumure. La phase organique a ensuite été séchée sur sulfate de magnésium puis le solvant a été évaporé sous vide. Le produit a été purifié par chromatographie sur colonne (éluant cyclohexane/acetate d'éthyle 9/1). Le rendement est de 70%. Le produit final est un liquide jaune.

**NMR:** ¹H (CDCl₃; 300MHz): 1.33ppm-1.25 (m, 24H:); 2.81ppm (t, 2H); 4.47ppm (t, 2H).

### 2) Deuxième étape : synthèse du copolymère

Dans un tube de Schlenk, on a introduit 0,038 g (0,16 mmol) d'azobis(cyanocyclohexane) (VAZO-88), 0,4 g (1,5 mmol) de ω-pentadecathionolactone obtenu à l'étape précédente et 0,8 g (15 mmol) de pivalate de vinyle. Le ω-pentadecathionolactone (monomère de formule (I-2)) représente 20 % (en mole) par rapport à l'acétate de vinyle (monomère de formule (II)). Le milieu réactionnel a été dégazé puis maintenu sous argon à une température de 88°C pendant 5 heures et 20 minutes. La conversion en monomère, déterminée par résonnance magnétique nucléaire de l'hydrogène (RMN ¹H), était de 25 % pour le ω-pentadecathionolactone et de 92 % pour le pivalate de vinyle. Le milieu réactionnel a été repris par un minimum de toluène puis précipité dans l'éther de pétrole. La masse molaire moyenne en nombre (Mn), ainsi que l'indice de polymolécularité (Mw/Mn) du polymère purifié ainsi obtenu, sous forme de poudre, ont été mesurés par chromatographie d'exclusion stérique (éluant : diméthylformamide (DMF) / 10 mM LiBr) avec une courbe d'étalonnage à base de polystyrène. Mn = 2200 g/mol ; Mw/Mn = 3,8.

### EXEMPLE 6 : Dégradation chimique du copolymère à base d'acétate de vinyle et d'ε-thionocaprolactone de l'exemple 1

20 mg du copolymère de l'exemple 1 ont été dilués dans 2 mL de dichlorométhane avant addition de 2 mL d'isopropyl amine. Le milieu réactionnel a été agité pendant une nuit à température ambiante. Le solvant et l'amine ont ensuite été évaporés sous pression réduite, puis le résidu a été dissous dans le THF et analysé par chromatographie d'exclusion stérique avec une installation équipée de deux colonnes Styragel H3R et HR4E, d'un détecteur réfractométrique et d'un détecteur de diffusion de lumière, pour une analyse dans le tetrahydrofurane (THF) à 35°C et un débit de 1mn/min, Mn = 1.5 kDa, D = 3.83. Il apparaît qu'après dégradation du copolymère par l'isopropyl amine, la distribution de masse molaire est fortement décalée dans le domaine des faibles masses molaires comparativement au polymère d'avant traitement, attestant de la dégradation du squelette résultant de la présence des liaisons thioesters.

## Revendications

1. Procédé de préparation de copolymères, de préférence dégradables, ledit procédé comprenant au moins une étape de polymérisation radicalaire par ouverture de cycle d'au moins un monomère cyclique avec au moins un monomère comportant une insaturation éthylénique, en présence d'un amorceur de polymérisation par voie radicalaire, ledit procédé étant **caractérisé en ce que** :
(i) le monomère cyclique est choisi parmi les thionolactones et les thionocarbonates de formule (I) suivante : 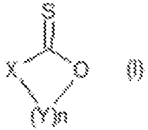 dans laquelle :
- X est un atome d'oxygène ou un groupement -CH₂- ;
- Y est choisi parmi les groupements -CH₂-, -CH₂-O-CH₂-, -O-CH₂-CH₂-, -CH₂-CH₂-O-CH₂-CH₂, et CH₂-O-CH₂-CH₂ ;
- n est un nombre entier supérieur ou égal à 1 ;
étant entendu que :
- lorsque Y représente un groupement -CH₂-, alors n est supérieur ou égal à 4,
- lorsque X représente un atome d'oxygène, alors Y est différent d'un groupement -O-CH₂-CH₂-; et
- lorsque X représente un groupement -CH₂-, et que Y représente un groupement -O-CH₂-CH₂-, alors l'atome d'oxygène du groupement Y est relié à X ;
et **en ce que**
(ii) le monomère comportant une insaturation éthylénique est choisi parmi les monomères de formule (II) suivante : 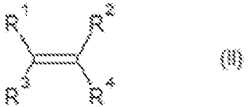 dans laquelle :
- R¹, R² et R³ sont identiques et représentent un atome d'hydrogène,
- R⁴ représente un atome d'hydrogène, un radical alkyle, ou un groupement choisi parmi les groupements imidazole, alkylimidazolium, carbazole, -OC(O)R⁵, ou un groupement de formule (III) suivante : 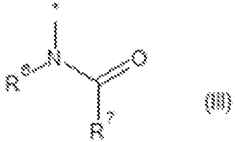
- R⁵ représente un radical alkyle, halogénoalkyle, trifluoroalkyle, aryle, ou arylalkyle,
- l'astérisque (*) représente le point d'ancrage du groupement de formule (III) à l'atome de carbone du composé de formule (II),
- R⁶ et R⁷, identiques ou différents, représentent un atome d'hydrogène, un radical alkyle, cycloalkyle, arylalkyle, aryle, glycidyle, ou bien R⁶ et R⁷, conjointement avec les atomes d'azote et de carbone du groupement de formule (III) auquel ils sont liés, forment un cycle hétérocarboné comprenant de 4 à 7 atomes de carbone.

2. Procédé selon la revendication 1, **caractérisé en ce que** les thionolactones ou les thionocarbonates de formule (I) sont choisies parmi l'ε-thionocaprolactone, le ω-pentadecathionolactone, la nonadécathionolactone, la tricosathionolactone, les éthers couronnes comportant un thionoester, le tetraméthylène thionocarbonate et le thionocarbonate de diéthylèneglycol.

3. Procédé selon la revendication 1 ou 2, **caractérisé en ce que** les monomères de formule (II) sont choisis les esters vinyliques de formule (II-1) suivante : 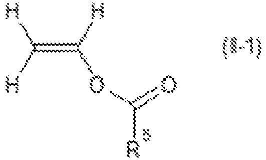 dans laquelle R⁵ représente un radical alkyle, halogénoalkyle, trifluoroalkyle, aryle, ou arylalkyle.

4. Procédé selon la revendication 3, **caractérisé en ce que** les monomères de formule (II-1) sont choisis parmi l'acétate de vinyle, le pivalate de vinyle, le trifluoroacétate de vinyle, le chloroacétate de vinyle, le propionate de vinyle, le butyrate de vinyle, le néodécanoate de vinyle, et le trifluorobutyrate de vinyle.

5. Procédé selon l'une quelconque des revendications 1 et 2, **caractérisé en ce que** les monomères de formule (II) sont choisis parmi ceux dans lesquels R⁴ représente un radical alkyle linéaire ou ramifié.

6. Procédé selon la revendication 5, **caractérisé en ce que** les monomères de formule (II) sont choisis parmi l'éthylène et l'octène.

7. Procédé selon l'une quelconque des revendications 1 et 2, **caractérisé en ce que** les monomères de formule (II) sont choisis parmi les monomères N-vinyliques de formule (II-2) suivante 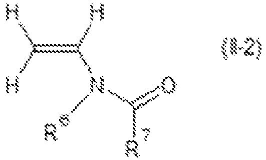 dans laquelle R⁶ et R⁷, identiques ou différents, représentent un atome d'hydrogène, un radical alkyle, cycloalkyle, arylalkyle, aryle, glycidyle, ou bien R⁶ et R⁷, conjointement avec les atomes d'azote et de carbone du groupement de formule (III) auquel ils sont liés, forment un cycle hétérocarboné comprenant de 4 à 7 atomes de carbone.

8. Procédé selon la revendication 7, **caractérisé en ce que** les monomères de formule (II-2) sont choisis parmi le N-vinylformamide, le N-vinylacétamide, le N-méthyl,N-vinylacétamide, la N-vinylpyrrolidone, la N-vinylpipéridone, et le N-vinylcaprolactame.

9. Procédé selon l'une quelconque des revendications précédentes, **caractérisé en ce que** le ou les monomères de formule (I) représentent au plus 50 % en nombre par rapport au nombre total de monomères de formules (I) et (II).

10. Procédé selon l'une quelconque des revendications précédentes, **caractérisé en ce que** le ou les monomères de formule (I) représentent de 5 à 30 % environ en nombre, par rapport au nombre total de monomères de formules (I) et (II).

11. Procédé selon l'une quelconque des revendications précédentes, **caractérisé en ce que** la polymérisation radicalaire par ouverture de cycle des monomères de formules (I) et (II) est menée en masse ou en solution dans un solvant.

12. Procédé selon l'une quelconque des revendications précédentes, **caractérisé en ce que** la polymérisation est réalisée dans un solvant et **en ce que** la quantité totale de monomères de formules (I) et de formule (II) varie de 30 à 60 % en masse par rapport à la masse totale du milieu réactionnel.

13. Procédé selon l'une quelconque des revendications précédentes, **caractérisé en ce que** la polymérisation est réalisée à une température de 5 à 150°C.

14. Procédé selon l'une quelconque des revendications précédentes, **caractérisé en ce que** la polymérisation est menée en présence d'un agent de contrôle de la polymérisation.

15. Copolymère, de préférence dégradable, **caractérisé en ce qu'**il comprend des liaisons thioesters ou thiocarbonates, et qu'il résulte de la polymérisation radicalaire par ouverture de cycle :
(i) d'au moins un monomère cyclique choisi parmi les thionolactones et les thionocarbonates de formule (I) suivante : 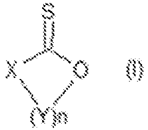 dans laquelle :
- X est un atome d'oxygène ou un groupement -CH₂- ;
- Y est choisi parmi les groupements -CH₂-, -CH₂-O-CH₂-, -O-CH₂-CH₂-, -CH₂-CH₂-O-CH₂-CH₂, et CH₂-O-CH₂-CH₂ ;
- n est un nombre entier supérieur ou égal à 1 ;
étant étendu que :
- lorsque Y représente un groupement -CH₂-, alors n est supérieur ou égal à 4,
- lorsque X représente un atome d'oxygène alors Y est différent d'un groupement -O-CH₂-CH₂- ; et
- lorsque X représente un groupement -CH₂-, et que Y représente un groupement -O-CH₂-CH₂-, alors l'atome d'oxygène du groupement Y est relié à X; et
(ii) d'au moins un monomère comportant une insaturation éthylénique choisi parmi les monomères de formule (II) suivante : 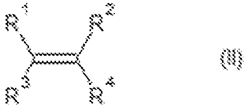 dans laquelle :
- R¹, R² et R³ sont identiques et représentent un atome d'hydrogène,
- R⁴ représente un atome d'hydrogène, un radical alkyle, ou un groupement choisi parmi les groupements imidazole, alkylimidazolium, carbazole, -OC(O)R⁵, ou un groupement de formule (III) suivante : 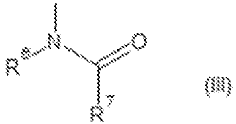
- R⁵ représente un radical alkyle, halogénoalkyle trifluoroalkyle, aryle, ou arylalkyle,
- l'astérisque (*) représente le point d'ancrage du groupement de formule (III) à l'atome de carbone du composé de formule (II),
- R⁶ et R⁷, identiques ou différents, représentent un atome d'hydrogène, un radical alkyle, cycloalkyle, arylalkyle, aryle, glycidyle, ou bien R⁶ et R⁷, conjointement avec les atomes d'azote et de carbone du groupement de formule (III) auquel ils sont liés, forment un cycle hétérocarboné comprenant de 4 à 7 atomes de carbone,
en présence d'un amorceur de polymérisation par voie radicalaire.

16. Copolymère selon la revendication 15, **caractérisé en ce qu'**il résulte de la polymérisation de l'ε-thionocaprolactone et de l'acétate de vinyle ou de la copolymérisation de l'ε-thionocaprolactone et de l'acétate de vinyle en présence d'un xanthate à titre d'agent de contrôle de la polymérisation radicalaire.

17. Copolymère selon la revendication 15 ou 16, **caractérisé en ce qu'**il est un copolymère statistique.

18. Copolymère selon l'une quelconque des revendications 15 à 17, **caractérisé en ce qu'**il présente une masse molaire moyenne en nombre de 2000 à 200000 g/mol, mesurée selon la méthode décrite dans la partie expérimentale.

19. Copolymère selon l'une quelconque des revendications 15 à 18, **caractérisé en ce qu'**il présente un indice de polymolécularité de 1,2 à 4.

20. Copolymère selon l'une quelconque des revendications 15 à 19, **caractérisé en ce que** le taux de liaisons thioesters ou thiocarbonates dans la chaîne principale du copolymère est de 2 à 15 % en nombre par rapport au nombre total de liaisons de la chaîne principale.

## Patentansprüche

1. Verfahren zur Herstellung von Copolymeren, vorzugsweise abbaubaren Copolymeren, wobei das Verfahren mindestens einen Schritt einer radikalischen Ringöffnungspolymerisation von mindestens einem zyklischen Monomer mit mindestens einem Monomer mit einer ethylenisch ungesättigten Bindung in Gegenwart eines Starters für die radikalische Polymerisation umfasst, wobei das Verfahren **dadurch gekennzeichnet ist, dass**:
(i) das zyklische Monomer ausgewählt ist aus Thionolactonen und Thionocarbonaten der folgenden Formel (I): 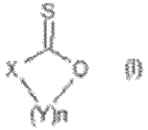 wobei:
- X ein Sauerstoffatom oder eine -CH₂-Gruppe ist;
- Y ausgewählt ist aus den Gruppen -CH₂-, -CH₂-O-CH₂-, -O-CH₂-CH₂-, -CH₂-CH₂-O-CH₂-CH₂ und CH₂-O-CH₂-CH₂;
- n eine ganze Zahl größer oder gleich 1 ist;
mit der Maßgabe, dass:
- wenn Y eine -CH₂-Gruppe darstellt, n größer oder gleich 4 ist,
- wenn X ein Sauerstoffatom darstellt, Y verschieden von einer -O-CH₂-CH₂-Gruppe ist; und
- wenn X eine -CH₂-Gruppe darstellt und Y eine -O-CH₂-CH₂-Gruppe darstellt, das Sauerstoffatom der Y-Gruppe an X gebunden ist;
und dadurch, dass
(ii) das Monomer mit einer ethylenisch ungesättigten Bindung aus den Monomeren der folgenden Formel (II) ausgewählt ist: 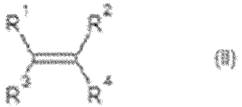 wobei:
- R¹, R² und R³ gleich sind und ein Wasserstoffatom darstellen,
- R⁴ ein Wasserstoffatom, einen Alkylrest oder eine Gruppe ausgewählt aus den Gruppen Imidazol, Alkylimidazolium, Carbazol, -OC(O)R⁵, oder eine Gruppe der folgenden Formel (III) darstellt: 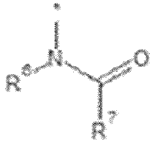
- R⁵ einen Alkyl-, Halogenalkyl-, Trifluoralkyl-, Aryl- oder Arylalkylrest darstellt,
- das Sternchen (*) den Ankerpunkt der Gruppe der Formel (III) an das Kohlenstoffatom der Verbindung der Formel (II) darstellt,
- R⁶ und R⁷, die gleich oder verschieden sind, ein Wasserstoffatom, einen Alkyl-, Cycloalkyl-, Arylalkyl-, Aryl- oder Glycidylrest darstellen, oder R⁶ und R⁷ zusammen mit den Stickstoff- und Kohlenstoffatomen der Gruppe der Formel (III), an die sie gebunden sind, einen Heterokohlenstoffring mit 4 bis 7 Kohlenstoffatomen bilden.

2. Verfahren nach Anspruch 1, **dadurch gekennzeichnet, dass** die Thionolactone oder Thionocarbonate der Formel (I) ausgewählt sind aus ε-Thionocaprolacton, ω-Pentadecathionolacton, Nonadecathionolacton, Tricosathionolacton, Kronenethern, die einen Thionoester enthalten, Tetramethylenthionocarbonat und Diethylenglycolthionocarbonat.

3. Verfahren nach Anspruch 1 oder 2, **dadurch gekennzeichnet, dass** die Monomere der Formel (II) ausgewählt sind aus Vinylestern der folgenden Formel (II-1): 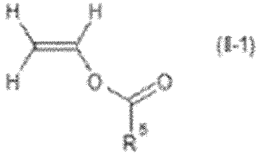 wobei R⁵ einen Alkyl-, Halogenalkyl-, Trifluoralkyl-, Aryl- oder Arylalkylrest darstellt.

4. Verfahren nach Anspruch 3, **dadurch gekennzeichnet, dass** die Monomere der Formel (II-1) ausgewählt sind aus Vinylacetat, Vinylpivalat, Vinyltrifluoracetat, Vinylchloracetat, Vinylpropionat, Vinylbutyrat, Vinylneodecanoat und Vinyltrifluorobutyrat.

5. Verfahren nach einem der Ansprüche 1 und 2, **dadurch gekennzeichnet, dass** die Monomere der Formel (II) unter denjenigen ausgewählt sind, in denen R⁴ einen linearen oder verzweigten Alkylrest darstellt.

6. Verfahren nach Anspruch 5, **dadurch gekennzeichnet, dass** die Monomere der Formel (II) ausgewählt sind aus Ethylen und Octen.

7. Verfahren nach einem der Ansprüche 1 und 2, **dadurch gekennzeichnet, dass** die Monomere der Formel (II) ausgewählt sind aus N-Vinylmonomeren der folgenden Formel (II-2) 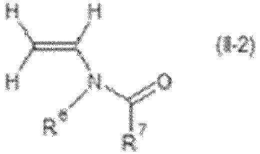 wobei R⁶ und R⁷, die gleich oder verschieden sind, ein Wasserstoffatom, einen Alkyl-, Cycloalkyl-, Arylalkyl-, Aryl- oder Glycidylrest darstellen, oder R⁶ und R⁷ zusammen mit den Stickstoff- und Kohlenstoffatomen der Gruppe der Formel (III), an die sie gebunden sind, einen Heterokohlenstoffring mit 4 bis 7 Kohlenstoffatomen bilden.

8. Verfahren nach Anspruch 7, **dadurch gekennzeichnet, dass** die Monomere der Formel (II-2) ausgewählt sind aus N-Vinylformamid, N-Vinylacetamid, N-Ethyl, N-vinylacetamid, N-Vinylpyrrolidon, N-Vinylpiperidon und N-Vinylcaprolactam.

9. Verfahren nach einem der vorhergehenden Ansprüche, **dadurch gekennzeichnet, dass** das Monomer oder die Monomere der Formel (I) zahlenmäßig höchstens 50 %, bezogen auf die Gesamtzahl der Monomere der Formeln (I) und (II), ausmacht/ausmachen.

10. Verfahren nach einem der vorhergehenden Ansprüche, **dadurch gekennzeichnet, dass** das Monomer oder die Monomere der Formel (I) zahlenmäßig etwa 5 bis 30 %, bezogen auf die Gesamtanzahl der Monomere der Formeln (I) und (II), ausmacht/ausmachen.

11. Verfahren nach einem der vorhergehenden Ansprüche, **dadurch gekennzeichnet, dass** die radikalische Ringöffnungspolymerisation der Monomere der Formeln (I) und (II) als Masse oder als Lösung in einem Lösungsmittel durchgeführt wird.

12. Verfahren nach einem der vorhergehenden Ansprüche, **dadurch gekennzeichnet, dass** die Polymerisation in einem Lösungsmittel durchgeführt wird und dass die Gesamtmenge der Monomere der Formeln (I) und der Formel (II) von 30 bis 60 Masse-%, bezogen auf die Gesamtmasse des Reaktionsmediums, variiert.

13. Verfahren nach einem der vorhergehenden Ansprüche, **dadurch gekennzeichnet, dass** die Polymerisation bei einer Temperatur von 5 bis 150 °C durchgeführt wird.

14. Verfahren nach einem der vorhergehenden Ansprüche, **dadurch gekennzeichnet, dass** die Polymerisation in Gegenwart eines Polymerisationssteuermittels durchgeführt wird.

15. Copolymer, vorzugsweise abbaubar, **dadurch gekennzeichnet, dass** es Thioester- oder Thiocarbonatbindungen umfasst und aus der radikalischen Ringöffnungspolymerisation resultiert:
(i) mindestens eines zyklischen Monomers, ausgewählt aus Thionolactonen und Thionocarbonaten der folgenden Formel (I): 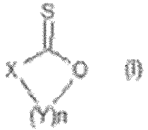 wobei:
- X ein Sauerstoffatom oder eine -CH₂-Gruppe ist;
- Y ausgewählt ist aus den Gruppen -CH₂-, -CH₂-O-CH₂-, -O-CH₂-CH₂-, -CH₂-CH₂-O-CH₂-CH₂ und CH₂-O-CH₂-CH₂;
- n eine ganze Zahl größer oder gleich 1 ist;
mit der Maßgabe, dass:
- wenn Y eine -CH₂-Gruppe darstellt, n größer oder gleich 4 ist,
- wenn X ein Sauerstoffatom darstellt, Y verschieden von einer -O-CH₂-CH₂-Gruppe ist; und
- wenn X eine -CH₂-Gruppe darstellt und Y eine -O-CH₂-CH₂-Gruppe darstellt, das Sauerstoffatom der Y-Gruppe an X gebunden ist; und
(ii) mindestens einem Monomer mit einer ethylenisch ungesättigten Bindung, das aus den Monomeren der folgenden Formel (II) ausgewählt ist: 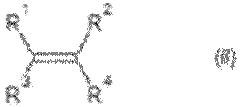 wobei:
- R¹, R² und R³ gleich sind und ein Wasserstoffatom darstellen,
- R⁴ ein Wasserstoffatom, einen Alkylrest oder eine Gruppe ausgewählt aus Imidazol-, Alkylimidazolium-, Carbazol-, -OC(O)R⁵-Gruppen, oder eine Gruppe der folgenden Formel (III) darstellt: 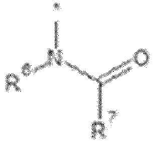
- R⁵ einen Alkyl-, Halogenalkyltrifluoralkyl-, Aryl- oder Arylalkylrest darstellt,
- das Sternchen (*) den Ankerpunkt der Gruppe der Formel (III) an das Kohlenstoffatom der Verbindung der Formel (II) darstellt,
- R⁶ und R⁷, die gleich oder verschieden sind, ein Wasserstoffatom, einen Alkyl-, Cycloalkyl-, Arylalkyl-, Aryl- oder Glycidylrest darstellen, oder R⁶ und R⁷ zusammen mit den Stickstoff- und Kohlenstoffatomen der Gruppe der Formel (III), an die sie gebunden sind, einen Heterokohlenstoffring mit 4 bis 7 Kohlenstoffatomen bilden,
in Gegenwart eines Starters für die radikalische Polymerisation.

16. Copolymer nach Anspruch 15, **dadurch gekennzeichnet, dass** es aus der Polymerisation von ε-Thionocaprolacton und Vinylacetat oder der Copolymerisation von ε-Thionocaprolacton und Vinylacetat in Gegenwart eines Xanthats als Steuermittel für die radikalische Polymerisation resultiert.

17. Copolymer nach Anspruch 15 oder 16, **dadurch gekennzeichnet, dass** es ein statistisches Copolymer ist.

18. Copolymer nach einem der Ansprüche 15 bis 17, **dadurch gekennzeichnet, dass** es zahlenmäßig ein mittleres Molekulargewicht von 2000 bis 200000 g/mol aufweist, gemessen gemäß der im experimentellen Teil beschriebenen Methode.

19. Copolymer nach einem der Ansprüche 15 bis 18, **dadurch gekennzeichnet, dass** es einen Polymolekularitätsindex von 1,2 bis 4 aufweist.

20. Copolymer nach einem der Ansprüche 15 bis 19, **dadurch gekennzeichnet, dass** der zahlenmäßige Anteil an Thioester- oder Thiocarbonatbindungen in der Hauptkette des Copolymers 2 bis 15 % beträgt, bezogen auf die Gesamtzahl der Bindungen in der Hauptkette.

## Claims

1. A process for preparing copolymers, preferably degradable copolymers, said process comprising at least one step of radical ring-opening polymerization of at least one cyclic monomer with at least one monomer comprising an ethylenic unsaturation, in the presence of a radical polymerization initiator, said process being **characterized in that**:
(i) the cyclic monomer is chosen from thionolactones and thionocarbonates of following formula (I): 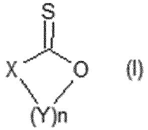 wherein:
- X is an oxygen atom or a -CH₂- group;
- Y is chosen from -CH₂-, -CH₂-O-CH₂-, -O-CH₂-CH₂, -CH₂-CH₂-O-CH₂-CH₂ and CH₂-O-CH₂-CH₂ groups;
- n is an integer greater than or equal to 1;
it being understood that:
- when Y represents a -CH₂- group, then n is greater than or equal to 4,
- when X represents an oxygen atom, then Y is other than an -O-CH₂-CH₂- group; and
- when X represents a -CH₂- group, and when Y represents an -O-CH₂-CH₂- group, then the oxygen atom of the Y group is connected to X; and **in that**
(ii) the monomer comprising an ethylenic unsaturation is chosen from the monomers of formula (II) below: 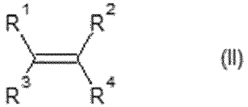 wherein:
- R¹, R² and R³ are identical and represent a hydrogen atom,
- R⁴ represents a hydrogen atom, an alkyl radical, or a group chosen from imidazole, alkylimidazolium, carbazole, -OC(O)R⁵ groups, or a group of formula (III) below: 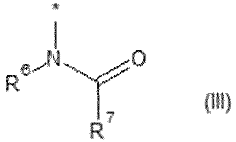
- R⁵ represents an alkyl, haloalkyl, trifluoroalkyl, aryl or arylalkyl radical,
- the asterisk (*) represents the anchoring point of the group of formula (III) to the carbon atom of the compound of formula (II),
- R⁶ and R⁷, which are identical or different, represent a hydrogen atom, an alkyl, cycloalkyl, arylalkyl, aryl, glycidyl radical, or else R⁶ and R⁷, together with the nitrogen and carbon atoms of the group of formula (III) to which they are bonded, form a heterocycle comprising from 4 to 7 carbon atoms.

2. The process as claimed in claim 1, **characterized in that** the thionolactones or thionocarbonates of formula (I) are chosen from ε-thionocaprolactone, ω-pentadecathionolactone, nonadecathionolactone, tricosathionolactone, crown ethers comprising a thionoester, tetramethylene thionocarbonate and diethylene glycol thionocarbonate.

3. The process as claimed in claim 1 or 2, **characterized in that** the monomers of formula (II) are chosen from vinyl esters of formula (II-1) below: 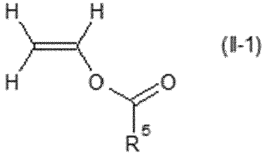 wherein R⁵ represents an alkyl, haloalkyl, trifluoroalkyl, aryl or arylalkyl radical.

4. The process as claimed in claim 3, **characterized in that** the monomers of formula (II-1) are chosen from vinyl acetate, vinyl pivalate, vinyl trifluoroacetate, vinyl chloroacetate, vinyl propionate, vinyl butyrate, vinyl neodecanoate and vinyl trifluorobutyrate.

5. The process as claimed in either one of claims 1 and 2, **characterized in that** the monomers of formula (II) are chosen from those wherein R⁴ represents a linear or branched alkyl radical.

6. The process as claimed in claim 5, **characterized in that** the monomers of formula (II) are chosen from ethylene and octene.

7. The process as claimed in either one of claims 1 and 2, **characterized in that** the monomers of formula (II) are chosen from N-vinyl monomers of formula (11-2) below: 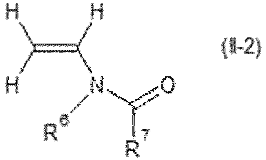 wherein R⁶ and R⁷, which are identical or different, represent a hydrogen atom, an alkyl, cycloalkyl, arylalkyl, aryl, glycidyl radical, or else R⁶ and R⁷, together with the nitrogen and carbon atoms of the group of formula (III) to which they are bonded, form a heterocycle comprising from 4 to 7 carbon atoms.

8. The process as claimed in claim 7, **characterized in that** the monomers of formula (11-2) are chosen from N-vinylformamide, N-vinylacetamide, N-methyl-N-vinylacetamide, N-vinylpyrrolidone, N-vinylpiperidone, and N-vinylcaprolactame.

9. The process as claimed in any one of the preceding claims, **characterized in that** the monomer(s) of formula (I) represent at most 50% by number relative to the total number of monomers of formulae (I) and (II).

10. The process as claimed in any one of the preceding claims, **characterized in that** the monomer(s) of formula (I) represent from 5% to 30% approximately by number, relative to the total number of monomers of formulae (I) and (II).

11. The process as claimed in any one of the preceding claims, **characterized in that** the radical ring-opening polymerization of the monomers of formulae (I) and (II) is carried out in bulk or in solution in a solvent.

12. The process as claimed in any one of the preceding claims, **characterized in that** the polymerization is carried out in a solvent and **in that** the total amount of monomers of formulae (I) and of formula (II) varies from 30% to 60% by mass relative to the total mass of the reaction medium.

13. The process as claimed in any one of the preceding claims, **characterized in that** the polymerization is carried out at a temperature of from 5°C to 150°C.

14. The process as claimed in any one of the preceding claims, **characterized in that** the polymerization is carried out in the presence of a polymerization control agent.

15. A copolymer, preferably a degradable copolymer, **characterized in that** it comprises thioester or thiocarbonate bonds, and **in that** it results from the radical ring-opening polymerization of:
(i) at least one cyclic monomer chosen from thionolactones and thionocarbonates of following formula (I) : 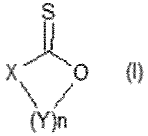 wherein:
- X is an oxygen atom or a -CH₂- group;
- Y is chosen from -CH₂-, -CH₂-O-CH₂-, -O-CH₂-CH₂, -CH₂-CH₂-O-CH₂-CH₂ and CH₂-O-CH₂-CH₂ groups;
- n is an integer greater than or equal to 1;
it being understood that:
- when Y represents a -CH₂- group, then n is greater than or equal to 4,
- when X represents an oxygen atom, then Y is other than an -O-CH₂-CH₂- group; and
- when X represents a -CH₂- group, and when Y represents an -O-CH₂-CH₂- group, then the oxygen atom of the Y group is connected to X; and
(ii) at least one monomer comprising an ethylenic unsaturation chosen from the monomers of formula (II) below: 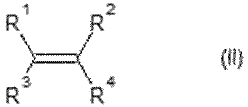 wherein:
- R¹, R² and R³ are identical and represent a hydrogen atom,
- R⁴ represents a hydrogen atom, an alkyl radical, or a group chosen from imidazole, alkylimidazolium, carbazole, -OC(O)R⁵ groups, or a group of formula (III) below: 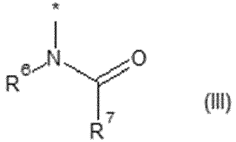
- R⁵ represents an alkyl, haloalkyl, trifluoroalkyl, aryl or arylalkyl radical,
- the asterisk (*) represents the anchoring point of the group of formula (III) to the carbon atom of the compound of formula (II),
- R⁶ and R⁷, which are identical or different, represent a hydrogen atom, an alkyl, cycloalkyl, arylalkyl, aryl, glycidyl radical, or else R⁶ and R⁷, together with the nitrogen and carbon atoms of the group of formula (III) to which they are bonded, form a heterocycle comprising from 4 to 7 carbon atoms,
in the presence of a radical polymerization initiator.

16. The copolymer as claimed in claim 15, **characterized in that** it results from the polymerization of ε-thionocaprolactone and vinyl acetate or from the copolymerization of ε-thionocaprolactone and vinyl acetate in the presence of a xanthate as radical polymerization control agent.

17. The copolymer as claimed in claim 15 or 16, **characterized in that** it is a statistical copolymer.

18. The copolymer as claimed in any one of claims 15 to 17, **characterized in that** it has a number-average molar mass of from 2000 to 200 000 g/mol, as measured according to the method described in the experimental part.

19. The copolymer as claimed in any one of claims 15 to 18, **characterized in that** it has a polymolecularity index of from 1.2 to 4.

20. The copolymer as claimed in any one of claims 15 to 19, **characterized in that** the content of thioester or thiocarbonate bonds in the main chain of the copolymer is from 2% to 15% by number relative to the total number of bonds of the main chain.
